**Europäisches Patentamt**

**European Patent Office**

**Office européen des brevets**

(19)

(11) Veröffentlichungsnummer: **0 259 608 B1**

## EUROPÄISCHE PATENTSCHRIFT

(12)

(45) Veröffentlichungstag der Patentschrift: **04.12.91**

(21) Anmeldenummer: **87111311.4**

(22) Anmeldetag: **05.08.87**

Die Akte enthält technische Angaben, die nach dem Eingang der Anmeldung eingereicht wurden und die nicht in dieser Patentschrift enthalten sind.

(51) Int. Cl.⁵: **C05D 3/02**, C05D 5/00, C05D 9/00

(54) **Düngemittel und Verfahren zu ihrer Herstellung.**

(30) Priorität: **04.09.86 DE 3630108**

(43) Veröffentlichungstag der Anmeldung:
**16.03.88 Patentblatt 88/11**

(45) Bekanntmachung des Hinweises auf die Patenterteilung:
**04.12.91 Patentblatt 91/49**

(84) Benannte Vertragsstaaten:
**AT CH DE LI NL SE**

(56) Entgegenhaltungen:
**JP-A-59 008 683**
**US-A- 3 923 489**

**Brockhaus ABC, Bd. 1, VEB F.A. Brockhaus Verlag Leipzig, 1969, S.113**

**PATENT ABSTRACTS OF JAPAN, unexamined applications, Field C, Band 7, Nr. 147, 28. Juni 1983 THE PATENT OFFICE JAPANESE GOVERNMENT, SEITE 8 C 173**

**JAPANESE PATENTS REPORT, Sektion Ch, Band 86, Nr. 9, 28. Marz 1986 DERWENT PUBLICATIONS LTD., London, J8-C**

(73) Patentinhaber: **BOMEG Gesellschaft für angewandte Bodenmelioration mbH**
**Kirchstrasse 42**
**W-3430 Witzenhausen 9(DE)**

(72) Erfinder: **Kautz, Karl M., Porf. Dr.**
**Hoheneiche**
**W-3342 Wehretal(DE)**
Erfinder: **Weissflog, Eckhard, Dr.**
**Ludwigsstrasse 23 1/2**
**W-8700 Würzburg(DE)**

(74) Vertreter: **Werner, Hans-Karsten, Dr. et al**
**Deichmannhaus am Hauptbahnhof**
**W-5000 Köln 1(DE)**

## Beschreibung

Gegenstand der vorliegenden Erfindung sind Calcium- und Magnesium-haltige Düngemittel gegebenenfalls mit einem Gehalt an langsam mobilisierbarem Stickstoff sowie weiteren Bestandteilen sowie Verfahren zu ihrer Herstellung.

Calcium- und Magnesium-haltige Düngemittel sind insbesondere vorgeschlagen worden zur Walddüngung, um die durch sauren Regen einerseits und vermodernde Nadeln und Blättern andererseits übersäuerten Waldböden zu verbessern und das Waldsterben zu bekämpfen. Es werden daher zur Zeit Großversuche durchgeführt, trockenes Kalksteinmehl zusammen mit Dolomitmehl zur Düngung und Sanierung von Wäldern einzusetzen.

Calcium- und Magnesium-haltige Düngemittel mit einem Gehalt an langsam mobilisierbarem Stickstoff sowie gegebenenfalls weiteren Bestandteilen wie Kalium, Phosphaten und Spurenelementen sind generell einsetzbar zur Düngung von Wiesen, Weiden und Äckern, wobei je nach Verwendungszweck der Gehalt an langsam mobilisierbarem Stickstoff niedriger oder höher gewählt wird.

Wegen der inzwischen gesetzlich vorgeschriebenen Rauchgasentschwefelung auch kleinerer Kraftwerke und Verbrennungsanlagen sind mehrere verschiedene Verfahren zur Rauchgasentschwefelung entwickelt worden. Neben nassen Verfahren zur Rauchgasentschwefelung sind auch trockene und quasi-trockene Verfahren entwickelt worden. Eine insbesondere für kleinere und mittlere Verbrennungsanlagen erfolgversprechende trockene Rauchgasentschwefelung ist die sogenannte Wirbelschichtverbrennung, bei der der feinverteilten Kohle ein trockenes Absorptionsmittel beigemischt wird.

Als trockenes Absorptionsmittel wird in erster Linie Kalksteinmehl eingesetzt, prinzipiell geeignet wäre aber auch Dolomitmehl. Der Wirkungsgrad von Wirbelschichtverbrennunganlagen ist inzwischen sehr hoch getrieben worden, so daß diese Technik an sich gute Aussichten hat in kleinen und mittleren Kraftwerken und Verbrennungsanlagen zur Anwendung zu kommen. Ein bisher noch nicht gelöstes Problem ist die Verwertung der in Wirbelschichtverbrennungsanlagen anfallenden Aschen, die sich nach den bisherigen Untersuchungen deutlich anders verhalten als alle anderen in Kohleverbrennungsanlagen anfallenden Aschen. Diese Unterschiede sind vor allem darauf zurückzuführen, daß bei der Wirbelschichtverbrennung niedrigere Temperaturen eingehalten werden, nämlich vorzugsweise 850 bis 950° C, da in diesem Temperaturbereich der Entschwefelungsgrad deutlich höher ist als bei den Temperaturen herkömmlicher Kohleverbrennungsanlagen.

Durch die relativ niedrigen Temperaturen unter 950° C unterbleibt bei Wirbelschichtaschen das sonst stets beobachtete Aufschmelzen. Wirbelschichtaschen weisen daher die ursprüngliche durch den Mahlprozeß oder die Verwachsung mit der Kohle entstandene Kornform auf. Wirbelschichtaschen weisen weiterhin eine wesentlich höhere spezifische Oberfläche auf und saugen wegen ihrer Porosität erheblich mehr Wasser auf als herkömmliche Aschen aus Schmelz- und Trockenfeuerungen. Erste Untersuchungen mit Wirbelschichtaschen als Zusatzstoff zu Zement sowie sonstigen Baustoffen haben gezeigt, daß die Eigenschaften so unterschiedlich sind, daß zumindest völlig neue Rezepturen und Technologien entwickelt werden müssen. Auch die an sich unerwünschte Deponierung von Wirbelschichtaschen ist bisher kostspielig und problematisch, da sie als Kraftwerksaschen als Sondermüll eingestuft werden.

Die Erfindung hat sich somit die Aufgabe gestellt, Wirbelschichtaschen einer sinnvollen und unproblematischen Verwendung zuzuführen. Es wurde überraschenderweise gefunden, daß Wirbelschichtaschen aus der Verbrennung von hochtonmineralhaltigen Kohlen in feinverteilter Form zur Herstellung von Düngemitteln geeignet sind.

Gerade die Wirbelschichtaschen aus der Verbrennung von hochtonmineralhaltigen Kohlen, und zwar sowohl Steinkohlen als auch Braunkohlen, sind besonders problematisch bei der Verwendung als Zuschlagsstoff für Zement und Baustoffe. Sie sind zum Teil auch besonders reaktiv und daher bei der Deponierung ohne besondere Aufbereitung problematisch. Überraschenderweise sind jedoch gerade diese Eigenschaften der Grund dafür, daß diese Wirbelschichtaschen ausgezeichnet zur Herstellung von Düngemitteln verwendet werden können. Es hat sich nämlich gezeigt, daß die nicht aufgeschmolzenen und daher nur teilweise zerstörten Tonmineralgitter in erheblichem Umfang aus Illit und Kaolinit bestehen und obendrein einen relativ hohen Kaliumgehalt aufweisen. Diese mineralischen Phasen sind durch den Verbrennungsprozeß im Wirbelschichtverfahren in jeder Hinsicht aktiviert und bieten sich daher als wertvolle Komponente für die Bodenverbesserung an. Die Wirbelschichtaschen enthalten weiterhin neben Calciumsulfat größere Mengen Calciumcarbonat. Sie sind daher geeignet, im Gemisch mit Dolomitmehl direkt für die Walddüngung und Waldsanierung eingesetzt zu werden. Sofern regional einerseits ein hoher Bedarf an derartigem Walddünger besteht und andererseits Dolomitmehl preiswert zur Verfügung steht, bietet sich sogar an, die Wirbelschichtverbrennungsanlagen anstelle von Kalkmehl mit Dolomitmehl zu betreiben und dabei unmittelbar zu einem Calcium- und Magnesium-haltigen Düngemittel zu kommen.

Der relativ alkalische Charakter der Wirbelschichtaschen zusammen mit den aktivierten Tonmineralien ist in der Lage, den übersäuerten Waldboden zu neutralisieren. Gleichzeitig wird dem Waldboden Calcium, Magnesium und Kalium angeboten. Die aktivierten Tonmineralien sind in der Lage, die einzelnen Komponenten des Düngers zu speichern und langsam freizugeben.

Es wurde weiterhin gefunden, daß feinverteilte Wirbelschichtaschen aus der Verbrennung hochtonmineralhaltiger Kohlen ausgezeichnet geeignet sind, den Aufschluß der Abfallprodukte moderner Landwirtschaft zu aktivieren, nämlich Stroh und Gülle bzw. deren Gemisch Mist. Hierbei wirken offensichtlich die aktivierten Tonmineralien und die an sie gebundenen Kationen katalytisch, so daß die Gemische aus Stroh und Gülle einerseits oder Mist andererseits wesentlich rascher zu unproblematischem Dünger abgebaut werden, wobei der dabei entstehende Stickstoff von den mineralischen Anteilen in langsam mobilisierbarer Form gebunden wird. Gleichzeitig beschleunigen diese Wirbelschichtaschen die Bildung und Freisetzung des Biogases, welches vorzugsweise aufgefangen und in üblicher Weise verwendet werden kann.

Es hat sich weiterhin gezeigt, daß der katalysierte Aufschluß von Stroh und Gülle bzw. Mist durch die Wirbelschichtaschen stärker beschleunigt wird bei erhöhten Temperaturen. Sofern also die Reaktionstemperatur nicht von sich aus hoch genug steigt und hoch genug bleibt, könnte durch Verbrennung von Biogas die optimale Reaktionstemperatur eingestellt werden. Am Ende der Reaktion entsteht ein Calcium- und Magnesium-haltiges Düngemittel mit einem Gehalt an langsam mobilisierbarem Stickstoff sowie weiteren Bestandteilen. Dieses Düngemittel enthält außerdem einen erheblichen Anteil an wertvollen Tonmineralien, die dem gedüngten Boden die oftmals bereits verlorengegangene Speicherkapazität für Nährstoffe verleiht.

Selbstverständlich können dem so erhaltenen Dünger von vornherein oder nachträglich weitere gewünschte oder notwendige Bestandteile zugefügt werden. Insbesondere kommen hierfür wiederum Dolomitmehl für das Magnesium, Phosphatträger wie Thomasmehl sowie Spurenelemente in Frage.

In den erfindungsgemäßen Düngern können selbstverständlich zusätzlich auch Biokompost und/oder andere organische Reststoffe beigemischt werden, die zusammen mit der tonmineralischen Komponente wesentlich besser von den Böden vertragen werden. Insbesondere die tonmineralische Komponente der erfindungsgemäßen Dünger ist für die Zukunft und die Gesundheit der durch intensive Mineraldüngung Überdüngung gefährdeten Böden von außerordentlichem Wert.

Eine besonders bevorzugte Variante des erfindungsgemäßen Düngemittels besteht somit aus dem Reaktionsgemisch von feinverteilter Wirbelschichtasche mit Mist bzw. Stroh und Gülle sowie gegebenenfalls einem Phosphatträger und sonstigen Beimischungen.

Die Herstellung erfolgt dadurch, daß man feinverteilte Wirbelschichtasche aus einer Wirbelschichtverbrennung und hochtonmineralhaltiger Kohlen mit Kalksteinmehl als Entschwefelungsmittel zusammen mit Dolomitmehl oder einer Wirbelschichtasche aus einer Wirbelschichtverbrennung hochtonmineralhaltiger Kohlen mit Dolomitmehl als Entschwefelungsmittel zusammen mit Mist, bzw. Stroh und Gülle in einem geschlossenen Reaktor reagieren läßt.

Der Reaktor ist vorzugsweise rührbar ausgestaltet. Die Reaktion kann chargenweise aber auch in einem Durchlaufreaktor erfolgen. Auf alle Fälle empfiehlt es sich, das entstehende Biogas aus dem Reakor aufzufangen und in üblicher Weise zu verwerten.

Das erfindungsgemäße Verfahren zur Herstellung der neuen Calcium- und Magnesium-haltigen Düngemittel kann daher vorzugsweise dezentral durchgeführt werden, wo Stroh und Gülle in größeren Mengen vorliegen und andererseits der entstehende Dünger wieder eingesetzt werden kann. Die Transport- und Lagerkosten für Wirbelschichtaschen sind auch relativ niedrig zu halten, da diese Aschen vor allen Dingen in kleineren und mittleren Verbrennungsanlagen entstehen, die dezentral existieren oder gebaut werden. Auch das Dolomitmehl sowie gegebenenfalls Phosphatträger und Träger von Spurenelementen sind von den Herstellungs- und Transportkosten her ohne weiteres tragbar, so daß ein insgesamt wirtschaftliches und in jeder Hinsicht umweltfreundliches Verwertungskonzept entsteht. Weiterhin wird den mit den erfindungsgemäßen Düngemitteln behandelten Wald, Wiesen und Ackerböden eine wertvolle tonmineralische Komponente zugeführt, die allen bisherigen Düngemitteln fehlt. Dies könnte zu einer langfristigen Gesundung der Wald- und Landwirtschaft führen. Auch die problematischen Reststoffe moderner Landwirtschaft, nämlich Stroh und Gülle bzw. Mist werden rasch und umweltfreundlich wieder zu Düngemitteln verarbeitet, wobei obendrein wertvolles Biogas entsteht, welches umweltfreundlich verwertet werden kann.

## Patentansprüche

1. Calcium- und Magnesium-haltige Düngemittel gegebenenfalls mit einem Gehalt an langsam mobilisierbarem Stickstoff sowie weiteren Bestandteilen, dadurch gekennzeichnet, daß sie feinverteilte Wirbelschichtaschen aus der Verbrennung hochtonmineralhaltiger Kohlen enthalten.

2. Düngemittel gemäß Anspruch 1, dadurch gekennzeichnet, daß sie bestehen aus einem trockenen Gemisch der feinverteilten Wirbelschichtasche und Dolomitmehl, sowie gegebenenfalls einem Phosphatträger.

3. Düngemittel gemäß Anspruch 1, dadurch gekennzeichnet, daß sie bestehen aus einer feinverteilten Wirbelschichtasche, welche unter Verwendung von Dolomitmehl in der Wirbelschichtverbrennung entstanden ist.

4. Düngemittel gemäß Anspruch 1, dadurch gekennzeichnet, daß sie bestehen aus dem Reaktionsgemisch von feinverteilter Wirbelschichtasche mit Mist bzw. Stroh und Gülle, sowie Dolomitmehl und gegebenenfalls einem Phosphatträger und anderen Komponenten.

5. Düngemittel gemäß Anspruch 4, dadurch gekennzeichnet, daß sie zusätzlich enthalten Biokompost und/oder andere organische Reststoffe.

6. Verfahren zur Herstellung von Calcium- und Magnesium-haltigen Düngemitteln mit einem Gehalt an langsam mobilisierbarem Stickstoff sowie gegebenenfalls weiteren Bestandteilen, dadurch gekennzeichnet, daß man feinverteilte Wirbelschichtasche aus einer Wirbelschichtverbrennung hochtonmineralhaltiger Kohlen mit Kalksteinmehl als Entschwefelungsmittel zusammen mit Dolomitmehl oder einer Wirbelschichtasche aus einer Wirbelschichtverbrennung hochtonmineralhaltiger Kohlen mit Dolomitmehl als Entschwefelungsmittel zusammen mit Mist, bzw. Stroh und Gülle in einem geschlossenen Reaktor reagieren läßt. ·

7. Verfahren gemäß Anspruch 6, dadurch gekennzeichnet, daß der Reaktor rührbar ausgestaltet ist.

8. Verfahren gemäß Anspruch 6 oder 7, dadurch gekennzeichnet, daß die Reaktion in einem Durchlaufreaktor erfolgt.

9. Verfahren gemäß einem der Ansprüche 6 bis 8, dadurch gekennzeichnet, daß das entstehende Biogas aus dem Reaktor aufgefangen und verwertet wird.

10. Verwendung von Wirbelschichtaschen aus der Verbrennung von hochtonmineralhaltigen Kohlen in feinverteilter Form zur Herstellung von Düngemitteln.

**Claims**

1. Fertilizers containing calcium and magnesium, and optionally with a content of slowly mobilizable nitrogen and further components, characterized in that they contain finely distributed fluidized bed ashes from the combustion of coals having a high content of clay·minerals.

2. The fertilizers according to claim 1, characterized in that they consist of a dry mixture of the finely distributed fluidized bed ash and dolomite meal and optionally a phosphate carrier.

3. The fertilizers according to claim 1, characterized in that they consist of a finely distributed fluidized bed ash formed in the fluidized bed combustion with the concomitant use of dolomite meal.

4. The fertilizers according to claim 1, characterized in that they consist of a reaction mixture of finely distributed fluidized bed ash with manure or straw and liquid manure as well as dolomite meal and optionally a phosphate carrier and other components.

5. The fertilizers according to claim 4, characterized in that they additionally contain bio-compost and/or other organic residual materials.

6. A process for the production of fertilizers containing calcium and magnesium, and with a content of slowly mobilizable nitrogen and optionally further components, characterized in that finely distributed fluidized bed ashes from the fluidized bed combustion of coals having a high content of clay minerals with limestone meal as a desulfurizing agent together with dolomite meal or fluidized bed ashes from the fluidized bed combustion of coals having a high content of clay minerals with dolomite meal as a desulfurizing agent together with manure or straw and liquid manure are allowed to react in a closed reactor.

7. The process according to claim 6, characterized in that the reactor is equipped to be agitated.

8. The process according to claims 6 and 7, characterized in that the reaction is carried out in a flow reactor.

9. The process according to any of claims 6 to 8, characterized in that the resulting bio-gas escaping from the reactor is collected and utilized.

10. Use of fluidized bed ashes in a finely distributed form from the fluidized bed combustion of coals having a high content of clay minerals for the production of fertilizers.

## Revendications

1. Engrais contenant du calcium et du magnésium, contenant éventuellement de l'azote pouvant être mobilisé lentement, ainsi que d'autres constituants, caractérisés en ce qu'ils contiennent des cendres finement divisées obtenues en lit fluidisé, provenant de la combustion de charbons à haute teneur en matières argileuses.

2. Engrais selon la revendication 1, caractérisés en ce qu'ils sont formés d'un mélange sec de la cendre finement divisée obtenue en lit fluidisé et de poudre de dolomie, ainsi qu'éventuellement d'un porteur de phosphate.

3. Engrais selon la revendication 1, caractérisés en ce qu'ils sont formés d'une cendre finement divisée obtenue en lit fluidisé, qu'on a produite en utilisant de la poudre de dolomie dans la combustion en lit fluidisé.

4. Engrais selon la revendication 1, caractérisés en ce qu'ils sont formés du mélange réactionnel de cendre finement divisée obtenu en lit fluidisé avec du fumier ou de la paille et du lisier, ainsi que de poudre de dolomie et éventuellement d'un porteur de phosphate et d'autres composants.

5. Engrais selon la revendication 4, caractérisés en ce qu'il contiennent en outre un compost biologique et/ou d'autres résidus organiques.

6. Procédé de préparation d'engrais contenant du calcium et du magnésium, qui contiennent de l'azote pouvant être mobilisé lentement, ainsi qu'éventuellement d'autres constituants, caractérisé en ce qu'on fait réagir de la cendre finement divisée obtenue en lit fluidisé, provenant d'une combustion en lit fluidisé de charbons à haute teneur en matières argileuses avec de la poudre de calcaire comme agent de désulfuration, en même temps que de la poudre de dolomie, ou bien une cendre obtenue en lit fluidisé, par combustion en lit fluidisé de charbons à haute teneur en matières argileuses avec de la poudre de dolomie comme agent de désulfuration, avec du fumier, ou de la paille et du lisier, dans un réacteur fermé.

7. Procédé selon la revendication 6, caractérisé en ce que le réacteur est équipé de façon à pouvoir être agité.

8. Procédé selon la revendication 6 ou 7, caractérisé en ce que la réaction s'effectue dans un réacteur à régime continu.

9. Procédé selon l'une des revendications 6 à 8, caractérisé en ce que le biogaz formé est recueilli dans le réacteur et utilisé.

10. Utilisation de cendres obtenues en lit fluidisé, provenant de la combustion de charbons à haute teneur en matières argileuses, sous forme finement divisée, pour la préparation d'engrais.